Europäisches Patentamt

(19) European Patent Office

Office européen des brevets

(11) EP 0 581 137 B1

## (12) EUROPÄISCHE PATENTSCHRIFT

(45) Veröffentlichungstag und Bekanntmachung des Hinweises auf die Patenterteilung:
**27.12.1996 Patentblatt 1996/52**

(51) Int Cl.$^6$: **G01S 13/87**, G01S 7/40, G01S 13/76

(21) Anmeldenummer: **93111416.9**

(22) Anmeldetag: **16.07.1993**

(54) **Verfahren zur Korrektur von durch Zeitabweichungen von Taktgebern hervorgerufenen Messfehlern in einem Sekundär-Radarsystem**

Method for correcting measurement errors induced by clock time drifts inside a secondary surveillance radar system

Procédé pour la correction d'erreurs de mesure engendrées par des dérivés temporelles d'horloge à l'intérieur d'un système de radar secondaire

(84) Benannte Vertragsstaaten:
**DE ES FR GB IT NL**

(30) Priorität: **25.07.1992 DE 4224645**

(43) Veröffentlichungstag der Anmeldung:
**02.02.1994 Patentblatt 1994/05**

(73) Patentinhaber: **Alcatel SEL Aktiengesellschaft D-70435 Stuttgart (DE)**

(72) Erfinder:
- **Höfgen, Günter, Dr. D-70806 Kornwestheim (DE)**
- **Zeitz, Rüdiger D-71254 Ditzingen (DE)**

(74) Vertreter: **Pechhold, Eberhard, Dipl.-Phys. et al Alcatel Alsthom Intellectual Property Department, Postfach 30 09 29 70449 Stuttgart (DE)**

(56) Entgegenhaltungen:
**EP-A- 0 016 417            FR-A- 2 559 273
US-A- 4 768 036**

- **IEEE TRANSACTIONS ON INSTRUMENTATION AND MEASUREMENT Bd. 37, Nr. 3 , September 1988 , NEW YORK , NY , USA Seiten 414 - 7 D. KIRCHNER , H. RESSLER , W. RIEDLER UND A. SÖRING 'A two way time transfer experiment via ESC-1 using the Mitrex modem'**

**Beschreibung**

Die Erfindung betrifft ein Verfahren gemäß dem Oberbegriff des Patentanspruchs 1.

In der Europäischen Patentanmeldung EP-A-0 505 827 ist ein Sekundär-Radarsystem für den Mode-S-Betrieb beschrieben, bei dem der Ort eines Luftfahrzeuges aus festgehaltenen Eintreffzeiten eines von einer Bordstation des Luftfahrzeuges auf ein Abfragesignal einer Bodenstation hin ausgesendeten Antwortsignals in den Empfängern mindestens dreier, an verschiedenen geographischen Orten befindlicher Bodenstationen mittels Hyperbelschnittverfahren bestimmt wird.

In einem solchen System müssen in den Bodenstationen befindliche Abfrageeinrichtungen streng synchron arbeiten, damit aus den einander zugehörigen gespeicherten Abfrage- und Eintreffzeitpunkten Signallaufzeiten und schließlich Entfernungen berechnet werden können.

Um den Synchronlauf sicherzustellen, ist in der oben genannten Patentanmeldung (siehe z. B. Anspruch 6) vorgesehen, die Synchronisation der Abfrageeinrichtungen der Bodenstationen mit Hilfe geostationärer Satelliten vorzunehmen. Eine derartige Synchronisation setzt deshalb in allen Bodenstationen Empfänger für die übertragenen Zeitsignale und Antennen für den Satellitenempfang voraus.

Der Erfindung liegt die Aufgabe zugrunde, ein Verfahren der eingangs beschriebenen Art anzugeben, nach dem Zeitabweichungen von Taktgebern und/oder durch diese Zeitabweichungen hervorgerufene Zeitmeßfehler ohne Benutzung einer zusätzlichen systemfremden Einrichtung sehr genau korrigiert werden können.

Diese Aufgabe wird durch die im Patentanspruch 1 angegebenen Merkmale gelöst.

Die Lösung benutzt dabei ein Prinzip, wie es zum Zeitvergleich zwischen zur Nachrichtenübertragung verwendeten Satelliten-Bodenstationen bekannt ist (siehe z. B. Aufsätze von D. Kirchner et al und D.A. Howe in IEEE Transactions on Instrumentation and Measurement, VOL. 37, No. 3, Sept. 1988, Seiten 414ff und 418ff).

Ein besonderer Vorteil des Verfahrens nach der Erfindung ist, daß zur Korrektur neben den zum Mode-S-Betrieb des Sekundär-Radars ohnehin erforderlichen Einrichtungen keine weiteren Einrichtungen benötigt werden. Die notwendigen Berechnungen und Meßwertübertragungen werden von den vorhandenen Prozessoren bzw. Übertragungseinrichtungen mitübernommen.

Ausgestaltungen des Verfahrens nach der Erfindung sind in den Unteransprüchen angegeben:

So sieht eine in Patentanspruch 2 wiedergegebene Ausgestaltung vor, die Messung von Signallaufzeiten in Hin- und Rückrichtung immer zwischen einer Zentralstation und einer weiteren Bodenstation vorzunehmen. Damit wird eine Synchronisation der Taktgeber aller Bodenstationen auf den Taktgeber der Zentralstation besonders einfach.

In Ansprüchen 3 und 4 beschriebene Verfahren verhindern zu starkes Abweichen der Taktgeber der Bodenstationen voneinander in Zeiten, in denen keine Bordstation zur Abfrage und zur Ausgabe eines Antwortsignals zur Verfügung steht, das Verfahren nach Anspruch 1 oder Anspruch 2 somit nicht ausgeführt werden kann.

Anhand zweier Figuren wird das Verfahren nach der Erfindung nachfolgend ausführlich beschrieben.

Fig. 1    zeigt das Prinzip der Erfindung in einem System mit zwei Bodenstationen.

Fig. 2    zeigt ein Sekundär-Radarsystem mit mehreren Bodenstationen mit synchronisierten Taktgebern.

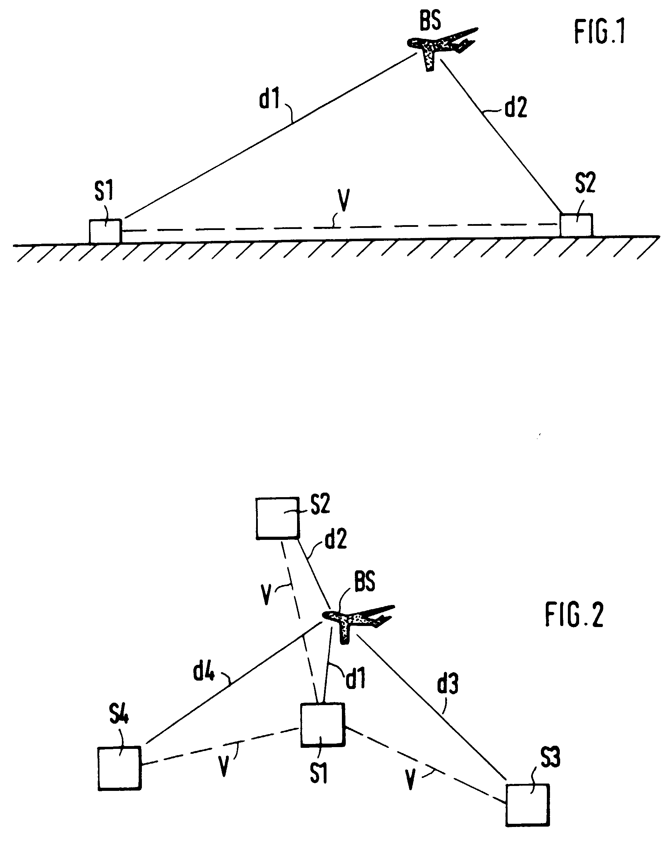

In Fig. 1 sind zwei Bodenstationen S1, S2 mit Abfrageeinrichtungen dargestellt, welche durch eine Datenverbindung V miteinander verbunden sind. Innerhalb der Sendereichweiten beider Abfrageeinrichtungen befindet sich ein Luftfahrzeug mit einer Bordstation BS, welche nach Empfang eines für sie bestimmten, von einer der Abfrageeinrichtungen ausgesendeten Abfragesignals nach einer vorgegebenen Verzögerungszeit ein Antwortsignal aussendet, das von beiden Abfrageeinrichtungen empfangen wird. Die Distanz der Bordstation BS zur Abfrageeinrichtung der Bodenstation S1 is d1, die zur Abfrageeinrichtung der Bodenstation S2 ist d2.

Die Abfrageeinrichtungen beider Bodenstationen sind mit hochgenauen Taktgebern ausgestattet, die in einem fest vorgegebenen Systemzeitrahmen miteinander synchron arbeiten. Diese Taktgeber dienen als Zeitnormal für Messungen der Laufzeiten von Abfrage- und Antwortsignalen. Mit ihnen können der Zeitpunkt des Aussendens einer zuvor festgelegten Impulsflanke eines Abfragesignals und der Zeitpunkt des Empfangs einer ebenfalls zuvor festgelegten Impulsflanke eines von der Bordstation nach Ablauf der fest vorgegebenen Verzögerungszeit ausgesendeten Antwortsignals in bezug auf eine Synchronisationsmarke des Systemzeitrahmens genau gemessen werden. Die zwischen dem Aussendezeitpunkt eines Abfragesignals und dem Eintreffzeitpunkt eines zugehörigen Antwortsignals abgelaufene Zeit kann dann, nach Übertragung des Eintreffzeitpunkts in die abfragende Bodenstation, dort berechnet werden.

Die berechnete Zeit setzt sich aus den Signallaufzeiten zwischen der abfragenden Bodenstation und der Bordstation, $t_1$, zwischen der Bordstation und der empfangenden Bodenstation, $t_2$, und der Verzögerungszeit $t_0$ in der Bordstation zusammen. Je nachdem, welche Bodenstation abfragt und in welcher Bodenstation der Empfangszeitpunkt für das Antwortsignal ermittelt wird, ist für die Signallaufzeit neben der vorgegebenen Verzögerungszeit $t_0$ die doppelte Distanz d1 (Abfrage und Antwortauswertung durch Bodenstation S1), die Distanz d1 + d2 (Abfrage durch Bodenstation S1, Antwortauswertung durch Bodenstation S2) oder die doppelte Distanz d2 (Abfrage und Antwortauswertung durch Bodenstation S2) maßgebend. Bei Auswertung des Antwortsignals durch die Abfrageeinrichtungen beider Bodenstationen und Austausch der gemessenen Signallaufzeiten über die Datenverbindung V lassen sich bei bekannter Wellenausbreitungsgeschwindigkeit (Lichtgeschwindigkeit c) die Distanzen d1 und d2 berechnen. Für eine Ortung des Luftfahrzeuges mittels eines Hyperbelschnittverfahrens ist noch mindestens eine weitere Bodenstation notwendig, deren Taktgeber ebenfalls mit dem Systemzeitrahmen synchronisiert sein muß.

Eine Synchronisation der Abfrageeinrichtungen aufeinander setzt zunächst eine Messung der bestehenden Zeitabweichung voneinander und hierzu zwei aufeinanderfolgende Abfrage/Antwort-Zyklen mit in einander entgegengesetzten Richtungen über dieselben Distanzen hinweg stattfindenden Signalübertragungen voraus. So folgt z.B. nach Empfang eines durch die Abfrageeinrichtung S1 ausgelösten Antwortsignals der Bordstation BS in der Station S2 nach vorgegebener Wartezeit eine Abfrage durch die Station S2 und ein Empfang des auf diese Abfrage hin ausgesendeten Antwortsignals der Bordstation BS durch die Bodenstation S1. Die zwischen Absenden des Abfragesignals und Empfang des zugehörigen Antwortsignals gemessene Zeitspanne ist in beiden Richtungen die gleiche, sofern die Abfrageeinrichtungen exakt synchron arbeiten und die Abfragen so schnell aufeinanderfolgen, daß eine zwischenzeitliche Ortsveränderung der Bordstation nicht ins Gewicht fällt. Stimmt die Synchronisation nicht genau, so werden für beide Übertragungsrichtungen die benötigten Zeitspannen falsch gemessen. Der gemessene Fehler ist für beide Übertragungsrichtungen gleich, hat jedoch für jede Übertragungsrichtung ein anderes Vorzeichen.

Wird in Fig. 1 die Signallaufzeit über die Distanz d1 mit $t_1$, die Signallaufzeit über die Distanz d2 mit $t_2$ und die Verzögerungszeit in der Bordstation mit $t_0$ bezeichnet, so ergibt sich als Gesamtzeit für einen von Bodenstation 1 nach Bodenstation 2 oder umgekehrt gerichteten Abfrage/Antwort-Zyklus:

$$T_{1,2} = T_{2,1} = t_1 + t_0 + t_2$$

Tritt ein Synchronisationsfehler $t_f$ auf (z.B. ein Nacheilen des Taktgebers der Bodenstation S2) so wird für den durch die Station S1 ausgelösten Abfrage/Antwort-Zyklus eine Gesamtzeit von

$$T_{1,2} = t_1 + t_0 + t_2 - t_f$$

gemessen, für den in Gegenrichtung verlaufenden Abfrage/Antwort-Zyklus dagegen eine Gesamtzeit von:

$$T_{2,1} = t_2 + t_0 + t_1 + t_f$$

Die beiden Gesamtzeiten unterscheiden sich damit um $2 t_f$. Die Abweichung des Taktgebers der Bodenstation S2 vom Taktgeber der Bodenstation S1 beträgt somit $t_f$, die Hälfte des gemessenen Unterschiedes.

Besteht in der Bodenstation S2 nun die Möglichkeit, den dort befindlichen Taktgeber nachzustellen, so kann dies nach Übertragung von Betrag und Vorzeichen des festgestellten Zeitfehlers $t_f$ in die Station S2 vorgenommen werden. Ein exakter Synchronlauf der beiden Taktgeber ist damit wieder hergestellt. Die festgestellte Abweichung kann aber auch abgespeichert und bei der Entfernungsberechnung zum Zweck der Ortung des Luftfahrzeugs als Korrekturwert berücksichtigt werden. Damit braucht der fehlerbehaftete Meßwert nicht verworfen zu werden.

Die Dauer der Verzögerungszeit in der Bordstation geht in die gemessene Gesamtzeit nicht ein. Es ist deshalb unschädlich, wenn die Verzögerungszeiten der Bordstationen verschiedener Luftfahrzeuge nicht genau gleich sind. Die Verzögerungszeit einer einzelnen Bordstation sollte jedoch so konstant sein, daß sie sich während zwei aufeinanderfolgenden Abfrage/Antwort-Zyklen nicht meßbar ändert.

In der Praxis läßt sich diese Forderung nicht immer erfüllen. Es tritt vielmehr ein Jitter der Verzögerungszeit auf, der nach den für Sekundär-Radarsysteme geltenden Vorschriften der ICAO bis zu 50 Nanosekunden betragen darf. Zusätzlich muß auch bei der Messung der Empfangszeitpunkte in den Abfrageeinrichtungen der Bodenstationen mit statistisch verteilten Meßungenauigkeiten gerechnet werden.

Diese statistisch verteilt auftretenden Laufzeit- und Meßfehler lassen sich durch Mehrfachmessung und Mittelung der gemessenen Werte reduzieren.

Verfälschungen der gemessenen Gesamtzeiten können sich auch durch die Bewegung der Bordstation und die damit verbundene Signalwegänderung in der Zeit zwischen aufeinanderfolgenden Abfrage/Antwort-Zyklen ergeben. Derartige Verfälschungen bleiben dann gering, wenn die Wartezeit zwischen den aufeinanderfolgenden Abfrage/Antwort-Zyklen sehr kurz, z.B. in der Größenordnung von 1 Millisekunde ist. Zeitmeßfehler bleiben dann auch bei ungünstiger räumlicher Konstellation der Bodenstationen und der Bordstation (Bordstation senkrecht über einer der Bodenstationen) unterhalb von 1 Nanosekunde.

Figur 2 zeigt eine Gruppe von Bodenstationen S1 ... S4 eines zellular aufgebauten Netzes. In einem solchen Sekundär-Radarnetz wird der Ort eines Luftfahrzeugs (Bordstation BS) durch Messung der Laufzeiten eines von diesem auf ein Abfragesignal einer Bodenstation hin abgegebenen Antwortsignals zu mindestens drei Bodenstationen bestimmt. Soll gemäß einer in der o.g.

Europäischen Patentanmeldung beschriebenen Ausgestaltung des Systems zusätzlich eine Bestimmung der Flughöhe durch Auswertung der Laufzeiten des Antwortsignales erfolgen, so ist eine vierte, synchron arbeitende Bodenstation notwendig. Um die Abfrageeinrichtungen aller benötigten Bodenstationen wie vorstehend beschrieben synchronisieren oder durch Abweichungen der Taktgeber verursachte Meßfehler korrigieren zu können, ist es erforderlich, den Abfrage/Antwort-Betrieb dieser Bodenstationen so zu organisieren, daß alle Bodenstationen möglichst gleichmäßig verteilt Abfragen an dieselbe Bordstation senden und daß es dabei nicht zu Überschneidungen von Signalen an den Empfängern kommt oder Signale dann am Empfänger der Bordstation eintreffen, wenn dieser während des Sendens eines Antwortsignals abgeschaltet ist.

In einer Gruppe von Bodenstationen, wie in Fig. 2 dargestellt, ist es daher sinnvoll, jeweils eine der Bodenstationen als Zentralstation zu betreiben (oder eine zusätzliche Zentralstation einzurichten), deren Zeittakt als Systemtakt zu betrachten und die Zeitgeber der anderen Abfrageeinrichtungen auf die Systemzeit der Zentralstation zu synchronisieren. Die Berechnung der verschiedenen Distanzen und die Durchführung des Hyperbelschnittverfahrens wird dann nach Übertragung aller Meßwerte in die Zentralstation, in einer Recheneinrichtung in der Zentralstation ausgeführt.

In Fig. 2 gehören die Bodenstationen S1 bis S4 zusammen. Die Bodenstation S1 ist die Zentralstation, in der aus den Meßwerten aller Stationen die zur Ortung benötigten Signallaufzeiten ermittelt werden und in der auch die Ortung durchgeführt wird. Die Taktgeber aller Stationen sind zunächst grob auf eine Systemzeit synchronisiert, die den Stationen S2-S4 z.B. über die zwischen den Stationen bestehenden Datenverbindungen V von der Zentralstation vorgegeben wird. Auch eine Synchronisation mit Hilfe eines öffentlichen Normalzeitsenders oder mit Hilfe eines GPS-Zeittaktes ist möglich. Ausgehend von einem Systemzeitpunkt O oder einem vereinbarten Zeitpunkt der öffentlichen Uhrzeitvorgabe senden die Bodenstationen zu fest vorgegebenen Zeitpunkten, die z.B. jeweils 1 Millisekunde Abstand voneinander haben, in vorgegebener Reihenfolge Abfragesignale aus. Sendet z.B. die Zentralstation S1 zum Zeitpunkt 0 so folgt zum Zeitpunkt 0+1 ms die Bodenstation S2, zum Zeitpunkt 0+2 ms die Bodenstation S3 und schließlich, nach 3 ms, die Bodenstation S4. Nach einer vorgegebenen Wartezeit (z.B. 1 sec.) beginnt die Zentralstation mit einem neuen Abfragezyklus. Die Grobsynchronisation der Bodenstationen muß in diesem Falle wenigstens so gut sein, daß die Reihenfolge der Stationen beim Abfragen erhalten bleibt und auch keine Überlappungen der Abfragen auftreten.

Gelangt ein Luftfahrzeug mit eingeschalteter Bordstation (Transponder) in die Nähe der Stationen S1 bis S4, so empfangen die Stationen Squittersignale der Bordstation. Aus diesen Squittersignalen entnehmen sie die Kennung des Luftfahrzeuges und verwenden diese, um dessen Bordstation gezielt anzusprechen. Auch eine erste Grobortung des Luftfahrzeuges kann mit Hilfe der in den Bodenstationen registrierten Eintreffzeitpunkte der Squittersignale vorgenommen werden.

Kann die Bordstation gezielt angesprochen werden, so gibt sie auf jedes Abfragesignal, das ihre Kennung enthält, nach der vorgegebenen Verzögerungszeit $t_0$ ein Antwortsignal ab, dessen jeweiliger Eintreffzeitpunkt in den einzelnen Bodenstationen registriert und an die Zentralstation übertragen wird. Es kann dann das vorstehend für zwei Bodenstationen beschriebene Verfahren zur Zeitfehlerermittlung und zur Korrektur des Synchronlaufes der Bodenstationen für die Paarungen der Stationen S1/S2, S1/S3 und S1/S4, aber auch für die drei anderen möglichen Paarungen S2/S3, S2/S4 und S3/S4 durchgeführt werden. Der anfänglich möglicherweise große Synchronisationsfehler kann dadurch schrittweise reduziert werden, so daß nach einigen Sekunden alle beteiligten Bodenstationen, auch dann, wenn die Bodenstationen S1 bis S4 ohne Zusammenhang mit einem flächendeckenden Netz, z.B. zur Überwachung des Luftraumes, eingesetzt sind, sehr genau auf den von der Zentralstation S1 vorgegebenen Systemtakt synchronisiert sind.

**Patentansprüche**

1. Verfahren zur Korrektur von durch Zeitabweichungen von Taktgebern hervorgerufenen Meßfehlern in über Datenverbindungen miteinander verbundenen Bodenstationen (S1-S4) eines Sekundär-Radarsystems, das eine Ortung von Luftfahrzeugen durch Messung von Laufzeiten von an Bordstationen (BS) der Luftfahrzeuge gerichteten Abfragesignalen und von diesen Bordstationen gesendeten, in mindestens drei Bodenstationen empfangenen Antwortsignalen durchführt,
   **dadurch gekennzeichnet,** daß alle an der Ortung eines Luftfahrzeuges beteiligten Bodenstationen (S1-S4) in zyklischer Reihenfolge nacheinander, zu festgelegten Zeitpunkten innerhalb eines vom Taktgeber einer Bodenstation (S1) vorgegebenen Zeitrahmens Abfragesignale an die Bordstation (BS) des Luftfahrzeuges senden, daß Antwortsignale der Bordstation von allen Bodenstationen empfangen und die Empfangszeitpunkte festgestellt und jeweils für sich oder zusammen mit der dem Antwortsignal der Bordstation entnommenen Adresse der abfragenden Bodenstation unter den Bodenstationen ausgetauscht oder in eine Zentralstation (S1) übermittelt werden, daß in der Zentralstation oder in einer oder mehreren anderen Bodenstationen für jeweils wechselnde Paare von Bodenstationen die vom Aussendezeitpunkt eines Abfragesignals in der einen Bodenstation bis zum Empfangszeitpunkt des auf die Abfrage hin von der Bordstation gesendeten Antwortsignals in der anderen Bodenstation vergangene Zeit jeweils für die Hin-Richtung und für die Rück-Richtung berechnet und ein festgestellter Unterschied zwischen beiden Zeitspannen mit seinem halben Betrag als Zeitabweichung der Taktgeber der beiden Bodenstationen voneinander interpretiert und bei der Ortung zur Korrektur der Signallaufzeiten berücksichtigt wird.

2. Verfahren nach Anspruch 1, dadurch gekennzeichnet, daß Paare von Bodenstationen (S1, S2; S1, S3; S1, S4) jeweils so gebildet werden, daß eine Bodenstation (S1) die Zentralstation ist und daß eine in der Zentralstation festgestellte Zeitabweichung der Taktgeber der Bodenstationen eines Paares voneinander in die jeweils andere Bodenstation (S2, S3, S4) übermittelt, und dort zur Korrektur des Taktgebers verwendet wird.

3. Verfahren nach Anspruch 1 oder Anspruch 2, dadurch gekennzeichnet, daß zur Grobsynchronisation der Taktgeber der Bodenstationen eine Übertragung des Zeittaktes einer Bodenstation an alle anderen Bodenstationen über die Datenverbindungen (V) erfolgt.

4. Verfahren nach Anspruch 1 oder Anspruch 2, dadurch gekennzeichnet, daß zur Grobsynchronisation der Taktgeber der Bodenstationen alle Bodenstationen den Zeittakt eines öffentlichen Normalzeitsenders empfangen und ihre Taktgeber auf diesen Zeittakt einstellen.

## Claims

1. A method of correcting measurement errors caused by clock deviations in ground stations (S1-S4) of a secondary radar system which determines the positions of aircraft by measuring transit times of interrogation signals addressed to airborne stations (BS) and of reply signals transmitted by said airborne stations and received in at least three ground stations,
characterized in that all the ground stations (S1-S4) involved in determining the position of an aircraft transmit interrogation signal to the airborne station (BS) of the aircraft in a cyclic sequence and at fixed points of time within a time frame predetermined by the clock of a ground station (S1), that reply signals from the airborne station are received by all the ground stations, which determine the times of reception, which, by themselves or together with the address of the interrogating ground station, taken from the reply signal of the airborne station, are exchanged among the ground stations or communicated to a master station (S1), that in the master station or in one or more of the other ground stations, for changing pairs of ground stations, the elapsed time between the transmission of an interrogation signal in one of the ground stations of each pair and the reception in the other ground station of the reply signal transmitted by the airborne station in response to the interrogation is calculated for both directions, and that half the absolute value of any difference between the two times is interpreted as a deviation of the clocks of the two ground stations from each other and taken into account in the position determination to correct the signal transit times.

2. A method as claimed in claim 1, characterized in that pairs of ground stations (S1, S2; S1, S3; S1, S4) are formed in which one (S1) of the ground stations is the master station, and that any deviation of the clocks of a pair of ground stations from each other which is determined in the master station is communicated to the respective other ground station (S2, S3, S4) and used there to correct the clock.

3. A method as claimed in claim 1 or 2, characterized in that, to coarsely synchronize the clocks of the ground stations, the clock signal of one of the ground stations is transmitted over the data links (V) to all the other ground stations.

4. A method as claimed in claim 1 or 2, characterized in that, to coarsely synchronize the clocks of the ground stations, all the ground stations receive the time standard signal from a public time standard transmitter and adjust their clocks to said time standard signal.

## Revendications

1. Procédé de correction d'erreurs de mesure dues aux décalages temporels de générateurs d'impulsions dans Des stations au sol (S1-S4), reliées entre elles par des liaisons de données, d'un système radar secondaire qui localise des aéronefs en mesurant les temps de propagation de signaux d'interrogation adressés aux stations embarquées (BS) des aéronefs et ceux des signaux de réponse émis par ces stations embarquées et reçus par au moins trois stations au sol, caractérisé en ce que toutes les stations au sol (S1-S4) participant à la localisation d'un aéronef envoient périodiquement l'une après l'autre, à des moments définis à l'intérieur d'une période déterminée par le générateur d'impulsions d'une station au sol (S1), des signaux d'interrogation à la station embarquée (BS) de l'aéronef, en ce que les signaux de réponse de la station embarquée sont reçus par toutes les stations au sol et les moments de réception consignés et échangés individuellement ou globalement entre les stations au sol avec l'adresse de la station au sol envoyant le signal d'interrogation, laquelle adresse est communiquée par le signal de réponse de la station embarquée, ou transférés à une station centrale (S1), en ce que le temps qui s'écoule, dans la station centrale ou dans une ou plusieurs autres stations au sol pour chaque paire respectivement alternée de stations au sol, entre le moment d'émission d'un signal d'interrogation dans une des stations au sol et le moment de la réception du signal de réponse émis par la station embarquée en réponse à l'interrogation dans l'autre station au sol est respectivement calculé pour l'aller et le retour et en ce qu'une différence constatée entre les deux laps de temps est interprétée pour moitié comme décalage temporel entre les générateurs d'impulsions des deux stations au sol et pris en compte lors de la localisation pour corriger les temps de propagation des signaux.

2. Procédé selon la revendication 1, caractérisé en ce que les paires de stations au sol (S1, S2 ; S1, S3 ; S1, S4) sont respectivement formées de telle sorte qu'une des stations au sol (S1) représente la station centrale et qu'un décalage temporel constaté dans la station centrale entre les générateurs d'impulsions d'un couple de stations au sol est transféré dans l'autre station au sol (S2, S3, S4) en vue de la correction du générateur d'impulsions.

3. Procédé selon la revendication 1 ou 2, caractérisé en ce que, en vue de la synchronisation approximative des générateurs d'impulsions des stations au sol, la cadence de synchonisation d'une station au sol est transférée à toutes les autres stations au sol par les circuits de données (V).

4. Procédé selon la revendication 1 ou 2, caractérisé en ce que, en vue de la synchronisation approximative des générateurs d'impulsions des stations au sol, toutes les stations au sol reçoivent la cadence de synchronisation d'un émetteur de synchronisation normal public et règlent leurs générateurs d'impulsions sur cette cadence de synchronisation.

EP 0 581 137 B1

FIG.1

FIG.2